(19)

Europäisches Patentamt
European Patent Office
Office européen des brevets

(11) **EP 2 891 534 A1**

(12) **EUROPEAN PATENT APPLICATION**
published in accordance with Art. 153(4) EPC

(43) Date of publication:
**08.07.2015 Bulletin 2015/28**

(21) Application number: **13832267.2**

(22) Date of filing: **30.08.2013**

(51) Int Cl.:
**B22F 7/04** (2006.01)      **B22F 3/18** (2006.01)
**C22C 1/04** (2006.01)      **C22C 1/05** (2006.01)
**C22C 21/00** (2006.01)      **C22C 27/04** (2006.01)
**C22C 32/00** (2006.01)      **C22F 1/04** (2006.01)
**C22F 1/18** (2006.01)      **G21F 1/08** (2006.01)
**C22F 1/00** (2006.01)

(86) International application number:
**PCT/JP2013/073376**

(87) International publication number:
**WO 2014/034877 (06.03.2014 Gazette 2014/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **31.08.2012   JP 2012192373**

(71) Applicants:
• **Nippon Light Metal Co., Ltd.**
**Tokyo 140-8628 (JP)**
• **Nikkeikin Aluminium Core
Technology Company, Ltd.**
**Tokyo 140-0002 (JP)**

(72) Inventors:
• **KAMIMURA, Yusuke**
**Shizuoka-shi**
**Shizuoka 421-3291 (JP)**
• **KOIZUMI, Shingo**
**Shizuoka-shi**
**Shizuoka 421-3291 (JP)**
• **IINO, Masaki**
**Tokyo 140-0002 (JP)**
• **SANADA, Kazuto**
**Tokyo 140-8628 (JP)**

(74) Representative: **Hoffmann Eitle
Patent- und Rechtsanwälte PartmbB
Arabellastraße 30
81925 München (DE)**

(54)   **METAL-BASED COMPOSITE MATERIAL AND METHOD FOR PRODUCING SAME**

(57)   Provided is a metal-based composite material which has a sufficient radiation absorption function, also has excellent strength, corrosion resistance, processability, impact resistance and heat conductivity, and is inexpensive. A metal-based composite material having such a double-clad structure that a core material is sandwiched between a pair of skin materials each composed of an aluminum plate in such a manner that the core material is closely adhered to the skin materials, wherein the core material comprises a matrix produced by consolidating an aluminum powder by applying a pressure and tungsten particles dispersed in the matrix, and wherein the tungsten particles are contained in the core material in an amount of 5 to 70 vol%. A method for producing a metal-based composite material, which comprises filling a mixed powder of an aluminum powder that constitutes a matrix and tungsten particles into an aluminum case and then extending the mixed powder by applying a pressure.

FIG. 4

ROLLED MATERIAL [10vol%W, 0vol%B₄C, 3mmt, L-ST CROSS-SECTION]

EP 2 891 534 A1

**Description**

Technical Field

The present invention relates to a metal-based composite material which has performance in absorbing radioactive rays such as gamma rays (γ-rays) and a method of production of the same.

Background Art

In the past, various materials have been developed for absorbing or shielding radioactive rays such as γ-rays. As a material which is excellent in performance in absorbing γ-rays, tungsten or lead is suitable, but with lead, there are concerns over the effect on the environment or health. Further, with tungsten, the method of using tungsten or tungsten alloy as structural materials or the method of filling tungsten powder in a resin etc. has been used.
For example, in PLT 1, as a shielding material, a light material of an aluminum member and a heavy material of a tungsten member are combined to form a shielding structure. However, tungsten is heavy in weight, so when used as a structural material, there was the problem of a large load in handling.
Further, for example, PLT 2 discloses a γ-ray shielding panel material made of a thermoplastic resin which contains a non-metallic fine shielding powder and a shielding powder of a heavy metal. However, there was the problem that with a resin, degradation due to radioactive rays is liable to progress relatively quickly.
Further, for example, PLT 3 discloses a tungsten-based alloy which is obtained by rolling a sintered body consisting of tungsten as a main component and the balance of iron, copper, or nickel. However, sintered metallurgy had the problem of an increased production cost.

Citations List

Patent Literature

PLT 1: Japanese Patent Publication No. 2004-020414A
PLT 2: Japanese Patent Publication No. 2007-315843A
PLT 3: Japanese Patent No. 3697559B2

Summary of Invention

Technical Problem

Therefore, the present invention has as its object the provision of an inexpensive metal-based composite material which has a light weight per unit volume and a sufficient radioactive ray absorbing performance and which is excellent in strength, corrosion resistance, workability, impact resistance, heat conduction, and handling and a method of production of the same.

Solution to Problem

To achieve the above object, the metal-based composite material of the present invention is provided with a core material which is comprised of aluminum powder which is pressed together to form a matrix and of tungsten particles which are dispersed in the matrix and with a pair of skin materials which are comprised of aluminum sheets which are brought into close contact with and sandwich the core material to form a two-sided clad structure, the tungsten particles being contained in the core material in an amount of 5 vol% to 70 vol%.
Further, to achieve the above object, the method of production of the metal-based composite material of the present invention comprises:

(a) a step of mixing aluminum powder for forming the matrix and tungsten powder which is comprised of the tungsten particles in an amount of tungsten particles of 5 vol% to 70 vol% so as to form a mixed powder for forming the core material;
(b) a step of preparing a case which includes a lower case and an upper case which are comprised of aluminum sheets for forming the skin materials and which are formed to be able to be sealed with each other;
(c) a step of filling the lower case with the mixed powder;

(d) a step of covering the lower case with the upper case to seal it and thereby prepare a rollable member from the case filled with the mixed powder;

(e) a step of preheating the rollable member so that the mixed powder maintains a solid phase state; and

(f) a step of rolling the rollable member which was preheated in the preheating step to obtain the metal-based composite material.

Advantageous Effects of Invention

According to the metal-based composite material of the present invention, there is provided a metal-based composite material which is provided with a core which is comprised of a light weight matrix which is comprised of aluminum and of tungsten particles in a sufficient amount for realizing the function of absorbing radioactive rays in the matrix and with a pair of skin materials which are comprised of aluminum sheets with which the core is brought into contact and between which it is sandwiched to thereby form a two-sided clad structure and thereby has a light weight per unit volume and a sufficient radioactive ray absorbing performance and which is excellent in strength, corrosion resistance, workability, impact resistance, heat conduction, and handling.

According to the method of production of the metal-based composite material of the present invention, it is possible to fill a case which is comprised of aluminum sheets (or stainless steel sheets) with a mixed powder of aluminum powder and tungsten particles and roll it to thereby form a core material which is comprised of aluminum powder which is pressed together to form a matrix and of tungsten particles which are dispersed therein in an amount sufficient for realizing the function of absorbing radioactive rays and simultaneously to thereby closely adhere the skin materials which are comprised of aluminum sheets (or stainless steel sheets) which form the case and the core material to obtain a two-sided clad structure so as to produce the above metal-based composite material of the present invention. Further, since the material is rolled, it becomes suitable for producing large-sized shielding members. Brief Description of Drawings

FIG. 1 is a perspective view which shows a case which is used in a method of production of the present invention.

FIG. 2A is a view which shows a reinforcing frame which is used in a method of production of the present invention.

FIG. 2B is a longitudinal cross-sectional view which shows a case in the state filled with mixed powder in a method of production of the present invention.

FIG. 3A is a longitudinal cross-sectional view which shows a lower case which is used in a method of production of the present invention.

FIG. 3B is a longitudinal cross-sectional view of the state where a sleeve is superposed over the lower case of FIG. 3A.

FIG. 3C is a longitudinal cross-sectional view of the state where mixed powder is charged into a space which is formed by superposition of the lower case and sleeve in FIG. 3B.

FIG. 3D is a longitudinal cross-sectional view of the state of tapping after charging the mixed powder in FIG. 3C.

FIG. 3E is a longitudinal cross-sectional view of the state when detaching the sleeve after the tapping in FIG. 3D and moving a scraper along a top edge of the lower case to scrape off the part of the mixed powder which sticks out upward from the lower case.

FIG. 3F is a longitudinal cross-sectional view of the state when the part of the mixed powder which sticks out upward from the lower case is scraped off in FIG. 3E and recovered in a recovery box.

FIG. 3G is a longitudinal cross-sectional view of the state when the upper case is checked from above after the mixture is filled in the case so that the upper surface becomes level with the top edges of the lower case in FIG. 3F.

FIG. 3H is a longitudinal cross-sectional view of a rollable member in a state where the mixed powder is fully filled into the space which is formed by superposition of the lower case and the upper case in FIG. 3G.

FIG. 4 is a photograph which shows a microstructure of a metal-based composite material of W particles 10.0 vol% (44.3 wt%) which is prepared in an example of the present invention.

FIG. 5 is a photograph which shows a microstructure of a metal-based composite material of W particles 20.0 vol% (64.1 wt%) which is prepared in an example of the present invention.

FIG. 6 is a photograph which shows a microstructure of a metal-based composite material of W particles 40.0 vol% (82.7 wt%) which is prepared in an example of the present invention.

FIG. 7 is a photograph which shows a microstructure of a metal-based composite material of W particles 50.0 vol% (87.7 wt%) which is prepared in an example of the present invention.

FIG. 8 is a photograph which shows a microstructure of a metal-based composite material of W particles 10.0 vol% (44.7 wt%) and $B_4C$ particles 20.0 vol% (11.6 wt%) which is prepared in an example of the present invention.

FIG. 9 is a photograph which shows a microstructure of a metal-based composite material of W particles 20.0 vol% (64.5 wt%) and $B_4C$ particles 20.0 vol% (8.4 wt%) which is prepared in an example of the present invention.

Description of Embodiments

The metal-based composite material of the present invention is provided with a core material which is comprised of aluminum powder which is pressed together to form a matrix and of tungsten particles which are dispersed in the matrix and with a pair of skin materials which are comprised of aluminum sheets which are brought into close contact with and sandwich the core material to form a two-sided clad structure, the tungsten particles being contained in the core material in an amount of 5 vol% to 70 vol%. Note that, in the Description and Claims, "aluminum" means pure aluminum and aluminum alloy.

As the skin materials, from the viewpoint of lighter weight, aluminum is most preferred, but instead of aluminum, stainless steel may also be used. Stainless steel is inferior in the point of reducing weight compared with aluminum, but is excellent in corrosion resistance and strength. If used while lowering the clad rate, reduction of weight also becomes possible, so this can be used in accordance with the application. Note that, the clad rate is the ratio of thickness of the skin layers to the thickness of the metal-based composite material as a whole.

In the method of production of the present invention, a mixed powder of aluminum powder and tungsten particles which have the property of absorbing radioactive rays is filled in a hollow flat aluminum case. When filling it, preferably the case is tapped to raise the filled density. This is sealed to form a rollable member. This rollable member is preheated. The preheated rollable member is then rolled.

In this way, in a preferred embodiment, the case is filled with a mixed powder and further is tapped to raise the filled density of the mixed powder. In this state, the metal case is sealed whereby a rollable member is formed. Further, this rollable member is comprised of a powder constituted by the mixed powder which is sandwiched from above and below by skin materials which respectively define the top and bottom surfaces of the case. As a result, by preheating and rolling this rollable member, a metal-based composite material of a two-sided clad structure which is comprised of a core material which is obtained by mixing aluminum powder and ceramic particles while maintaining a high filled density and which is clad from above and below by aluminum sheet skin materials is obtained.

Furthermore, in the rollable member of the present invention, the top surface of the mixed powder, which corresponds to the core of the metal-based composite material which has the skin/core/skin two-sided clad structure, and the top sheet of the upper case (top skin material or top clad layer), which corresponds to the top layer in the clad structure, are in close contact in state. Further, the bottom surface of the mixed powder, which corresponds to the intermediate layer of the clad structure, and the bottom sheet of the lower case (top skin material or top clad layer), which corresponds to the bottom layer in the clad structure, are in close contact in state.

In the metal-based composite material which is obtained by rolling such a rollable member, the mutually adjoining layers are strongly bonded together. As a result, the metal-based composite material will never drop in mechanical strength. Further, in the present invention, the surface of the metal-based composite material is free of ceramic particles which would form starting points for breakage or would cause wear of the rolls etc., so a good rolled material can be obtained. Furthermore, the top and bottom surfaces of the hollow case function as top and bottom sheet materials of aluminum or stainless steel when forming the cladding, so the cladding is considered complete in the state with the mixed powder filled in the case and therefore the production process is simplified. Furthermore, the mixed powder in the hollow case is supplied to the rolling step in the form of powder as is while maintaining the solid phase state, so in the state with the mixed powder filled in the case, the bulk density which is maintained need only be at most 65% or so.

In another embodiment of the present invention, the aluminum powder is a purity 99.0% or more pure Al powder or an alloy powder which contains one or more of Mg, Si, Mn, and Cr in addition to Al in an amount of 0.2 to 2 wt%. The ceramic particles, together with the tungsten particles, account for 5 vol% to 70 vol% with respect to 100 vol% of the total volume of the mixed powder.

In the present invention, as the material which has the property of absorbing radioactive rays such as $\gamma$-rays, tungsten particles are used. The content of the tungsten particles in the matrix which is comprised of aluminum is 5 vol% to 70 vol%, more preferably 10 vol% to 60 vol%. If less than 5 vol%, a sufficient property of absorbing radioactive rays cannot be obtained, while if over 70 vol%, the metal based composite material falls in workability and the advantages of lighter weight cannot be obtained.

In one aspect of the present invention, the core material which is comprised of aluminum and tungsten can be made to further contain ceramic particles which have the function of absorbing neutrons. Due to this, the metal-based composite material of the present invention can be given the function of absorbing neutrons in addition to the function of absorbing $\gamma$-rays and other radioactive rays.

In the present invention, the metal-based composite material has two surfaces which are formed by skin materials of aluminum or stainless steel. The surfaces are free of hard tungsten particles and further ceramic particles as well which would form starting points for breakage or would cause wear of the rolls etc. In this way, it is possible to uniquely realize the effect of enabling formation of an excellent rolled material.

Further, when cladding mixed powder by metal sheet materials from above and below, the top and bottom surfaces of the hollow case function as top and bottom metal sheet materials when forming cladding. As a result, configuration as a cladding material is complete in the state with the mixed powder filled in the case. Due to this as well, the manufacturing process is simplified.

In this case, the purpose of raising the powder density in the past was to enable sufficient shape retention for supply of the mixed powder to the rolling step, so, for example, it was necessary that the bulk density of the powder become 98% or more, while in the present invention, the mixed powder is supplied as is in the state of a powder to the rolling step, so in the state where the mixed powder is filled in the case, the bulk density to be maintained need only be at most 65% or so. Below, the starting materials and method of production of the metal-based composite material of the present invention will be explained.

(1) Explanation of Starting Materials Core Material: Aluminum Powder for Forming Matrix

The aluminum powder for forming the core material of the metal-based composite material is preferably formed from an Al-based alloy, specifically an aluminum alloy prescribed by the JIS standard A 1100 (AA 1100 by A.A. standard). In detail, it is formed from a material which has as component ingredients silicon Si and iron Fe in a total of 0.95 wt% or less, copper Cu: 0.05 wt% to 0.20 wt%, manganese Mn: 0.05 wt% or less, zinc Zn: 0.10 wt% or less, and a balance of aluminum and unavoidable impurities.

However, in the present invention, the aluminum powder is not particularly limited in composition. For example, as the aluminum powder, powder of pure aluminum (JIS 1050, 1070, etc.) or an Al-Cu-based alloy (JIS 2017 etc.), Al-Mg-Si-based alloy (JIS 6061 etc.), Al-Zn-Mg-based alloy (JIS 7075 etc.), Al-Mn-based alloy, and various other types of alloys may be used alone or as two types or more mixed together.

In short, what sort of composition of aluminum alloy powder to select is determined in consideration of the desired characteristics, the deformation resistance in the later shaping, the amount of the tungsten particles (or ceramic particles) to be added, the costs of the starting materials, etc. For example, when desiring to raise the workability and heat dissipation of the metal-based composite material, pure aluminum powder is preferred. Pure aluminum powder is more advantageous in terms of the cost of the starting materials compared with aluminum alloy powder. Note that, the pure aluminum powder which is used preferably is one with a purity of 99.5 mass% or more (ordinary commercially available pure aluminum powder is 99.7 mass% or more).

Further, when imparting the ability to absorb neutrons, in other words, when desiring to keep low the passage of neutrons, boron compounds are used as the later explained ceramic particles. Here, when desiring to further raise the obtained ability to absorb neutrons, at least one type of element such as hafnium (Hf), samarium (Sm), and gadolinium (Gd) which is provided with the ability to absorb neutrons may be suitably added to the aluminum powder in an amount of 0.1 to 50 mass%.

Further, when high temperature strength is demanded, at least one type of element of titanium (Ti), vanadium (V), chromium (Cr), manganese (Mn), magnesium (Mg), iron (Fe), copper (Co), nickel (Ni), molybdenum (Mo), niobium (Nb), zirconium (Zr), strontium (Sr), etc. may be added to the aluminum powder. Further, when room temperature strength is demanded, at least one type of element of silicon (Si), iron (Fe), copper (Cu), magnesium (Mg), zinc (Zn), etc. can be added to the aluminum powder. In either case, each element can be added in an amount of 7 wt% or less, in the case of mixing two types or more, in a total amount of 15 mass% or less.

The average particle size of the aluminum powder is not particularly limited, but it is possible to use powder with an upper limit value of generally 200 $\mu$m or less, preferably 100 $\mu$m or less, more preferably 30 $\mu$m or less. The lower limit value of the average particle size is not particularly limited so long as production is possible, but usually is 0.5 $\mu$m or more, preferably 10 $\mu$m or more. In particular, it is possible to make the maximum particle size of the aluminum powder 100 $\mu$m or less and make the average particle size of the later explained reinforcing material constituted by ceramic particles 40 $\mu$m or less. In this case, there are the effects that the particles of the reinforcing material are uniformly dispersed, the parts with few particles of the reinforcing material are extremely small, and the properties of the metal-based composite material are stabilized.

If the difference of the average particle size of the aluminum alloy powder from the average particle size of the later explained tungsten particles (or ceramic particles) is large, cracks easily form at the time of rolling, so preferably the difference in average particle sizes is made small. If the average particle size becomes too large, uniform mixing with ceramic particles which cannot be made large in average particle size becomes difficult. As opposed to this, if the average particle size becomes too small, fine aluminum particles easily aggregate and uniform mixing with ceramic particles becomes extremely difficult. By making the average particle size of the aluminum particles a desirable range considering these, much better workability, shapeability, and mechanical properties can be obtained.

The average particle size of the aluminum powder in the present invention shows the value by the laser diffraction type particle size measurement method. The shape of the powder is also not limited. For example, the aluminum powder may be teardrop shapes, pearl shapes, spheroid shapes, flake shapes, indeterminate shapes, etc.

The method of production of the aluminum powder does not have to be particularly limited. For example, aluminum powder can be produced in accordance with a known method of production of metal powder. As the method of production, for example, the atomization method, melt spinning method, rotating disk method, rotating electrode method, or other rapid cooling and solidifying method etc. may be mentioned. Here, from the viewpoint of industrial production, the atomization method is preferable. In particular, the gas atomization method which atomizes a melt to produce a powder is preferable.

Note that, in the atomization method, the above melt is preferably heated to usually 700 to 1200°C for atomization. The reason is that by setting this temperature range, more effective atomization is possible. Further, the spray medium and atmosphere at the time of atomization may be air, nitrogen, argon, helium, carbon dioxide, water, or a mixed gas of the same, but the spray medium is preferably one using air, nitrogen gas, or argon gas from an economic viewpoint.

Core Material: Tungsten Particles Which Are Dispersed in Aluminum Matrix

The average particle size of the tungsten particles which are dispersed in the matrix of the core material preferably is an average particle size as close as possible to the particle size of the aluminum powder particles for forming the matrix of the core material. The form of the tungsten particles does not need to be particularly limited, but may be teardrop shapes, pearl shapes, spheroid shapes, flake shapes, indeterminate shapes, etc. The tungsten particles are contained in the core material in an amount of 5 vol% to 70 vol%, more preferably 10 vol% to 60 vol%. If less than 5 vol%, a sufficient radioactive ray absorption property cannot be obtained, while if over 70 vol%, the metal-based composite material deteriorates in workability and the advantage of lighter weight cannot be obtained.

Core Material (Optional Requirement): Ceramic Particles Copresent With Tungsten Particles

As ceramic particles in which aluminum powder and tungsten particles are mixed to impart a neutron absorbing function, there are $Al_2O_3$, SiC or $B_4C$, BN, aluminum nitride, silicon nitride, etc. These ceramics are used in a powder form. They may be used alone or as mixtures and are selected in accordance with the application of the composite material. Here, boron (B) has performance in absorbing neutrons (that is, performance in blocking the passage of neutrons), so when using boron-based ceramic particles, the aluminum composite material can also be used as a neutron absorbing material. In this case, as the boron-based ceramic, for example, $B_4C$, $TiB_2$, $B_2O_3$, FeB, $FeB_2$, etc. may be mentioned. These boron-based ceramics are used in the form of powder. They may be used alone or as mixtures. In particular, use of borocarbide $B_4C$ which contains a large amount of the isotope $^{10}B$ of B which absorbs neutrons well is preferable.

If the ceramic particles are too large in amount, the deformation resistance at the time of plastic working is high and plastic working is difficult. On top of this, the shaped member becomes brittle and easily breaks. Further, the bonding of the aluminum particles and the ceramic particles also becomes poor, clearances are easily formed, the various functions which are sought can no longer be obtained, and the strength and heat conductivity also fall. Furthermore, the cuttability as an aluminum-based composite material also falls. The particles are added in a range by which clear expression of the function of absorbing neutrons can be secured and the above inconveniences do not arise. In general, the ratio of the ceramic particles to the mixed powder as a whole is preferably made 5 vol% to 40 vol% or so, but the ratio to the total when combined with tungsten particles is preferably made 5 vol% to 70 vol% or so.

The $B_4C$, $Al_2O_3$, or other ceramic particles may be of any average particle sizes, but 1 to 30 $\mu$m is preferable. As explained in relation to the average particle size of the aluminum powder, the difference in particle size between these two types of powders is suitably selected in accordance with the specifications demanded. For example, the average particle size of the ceramic particles is more preferably 5 $\mu$m to 20 $\mu$m. Here, if the average particle size of the ceramic particles is larger than 20 $\mu$m, there is the problem that at the time of cutting, the sawteeth will immediately become worn. Further, if the average particle size of the ceramic particles is smaller than 5 $\mu$m, these fine powders will easily aggregate and uniform mixing with the aluminum powder is liable to become extremely difficult.

Note that, the average particle sizes of the tungsten particles and ceramic particles in the present invention show the values obtained by the laser diffraction type particle size distribution measurement method. The ceramic particles are also not limited in powder shape. For example, they may be teardrop shapes, pearl shapes, spheroid shapes, flake shapes, indeterminate shapes, etc.

Case for Forming Skin Materials The case which is used in the method of production of the metal-based composite material of the present invention (upper case, lower case, case body, and plug member) is made of aluminum or made of stainless steel which is excellent in adhesion with the mixed powder and is suitable for rolling. For example, in the case of a case which is made of aluminum, pure aluminum (JIS 1050, 1070, etc.) is preferably used. On the other hand, as the case material, it is also possible to use an Al-Cu-based alloy (JIS 2017 etc.), Al-Mg-based alloy (JIS 5052 etc.), Al-Mg-Si-based alloy (JIS 6061 etc.), Al-Zn-Mg-based alloy (JIS 7075 etc.), Al-Mn-based alloy, or various other types of alloy materials.

What kind of composition of aluminum to select is determined by considering the desired characteristics, costs, etc. For example, when desiring to raise the workability or heat dissipation, pure aluminum is preferable. Pure aluminum is advantageous in respect to the cost of the starting materials compared with the case of an aluminum alloy. Further, when desiring to further raise the strength or workability, an Al-Mg-based alloy (JIS 5052 etc.) is preferable. Furthermore, when desiring to further improve the ability to absorb neutrons, at least one type of element which is provided with a neutron absorbing ability such as Hf, Sm, or Gd is preferably added in an amount of 1 to 50 mass%.

(2) Explanation of Production Process

2-1. Mixed Powder Preparation Step

Aluminum powder and tungsten particles were prepared and these powders were uniformly mixed. The aluminum powder may be a single type alone or a plurality of types mixed together. Furthermore, when mixing ceramic particles, the ceramic particles may be a single type alone or a plurality of types, for example $B_4C$ and $Al_2O_3$, mixed together. The method of mixing the aluminum powder and the tungsten particles may be a known method. For example, a V-blender, cross rotary mixer, or other various types of mixers, a vibrating mill, planetary mill, etc. may be used for mixing for a predetermined time (for example, 10 minutes to 10 hours or so). Further, the mixing may be either dry or wet. Further, for the purpose of crushing at the time of mixing, alumina or SUS balls or other polishing media may be suitably added.

Further, basically, in this mixed powder preparation step, aluminum powder and tungsten particles are mixed to prepare a mixed powder and this mixed powder is sent on to the next step as is.

2-2. Case Preparation Step

In this case preparation step, a hollow flat case made of typically aluminum to be filled with the mixed powder which is produced in the above-mentioned mixed powder preparation step is prepared.

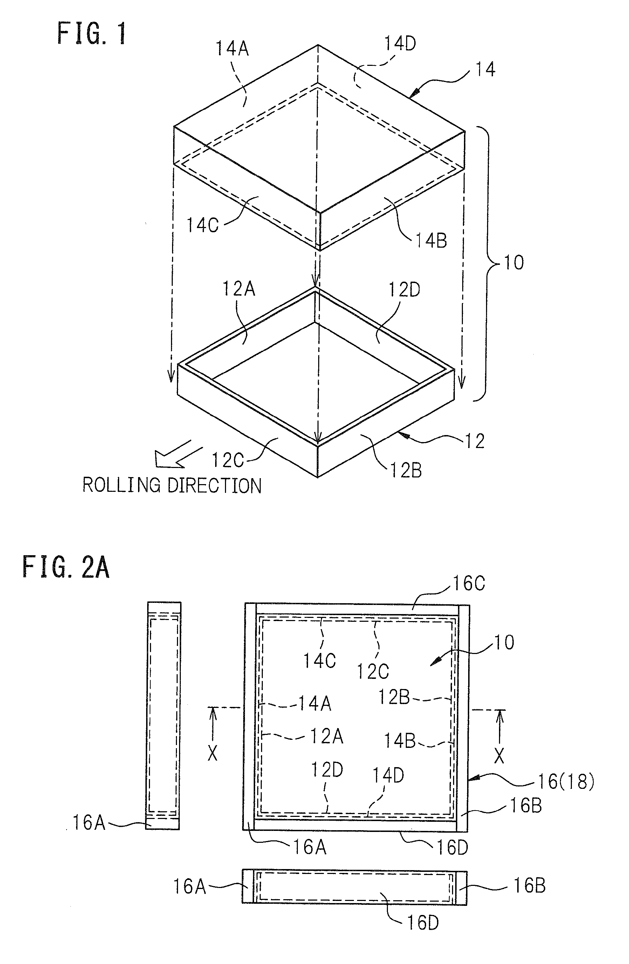

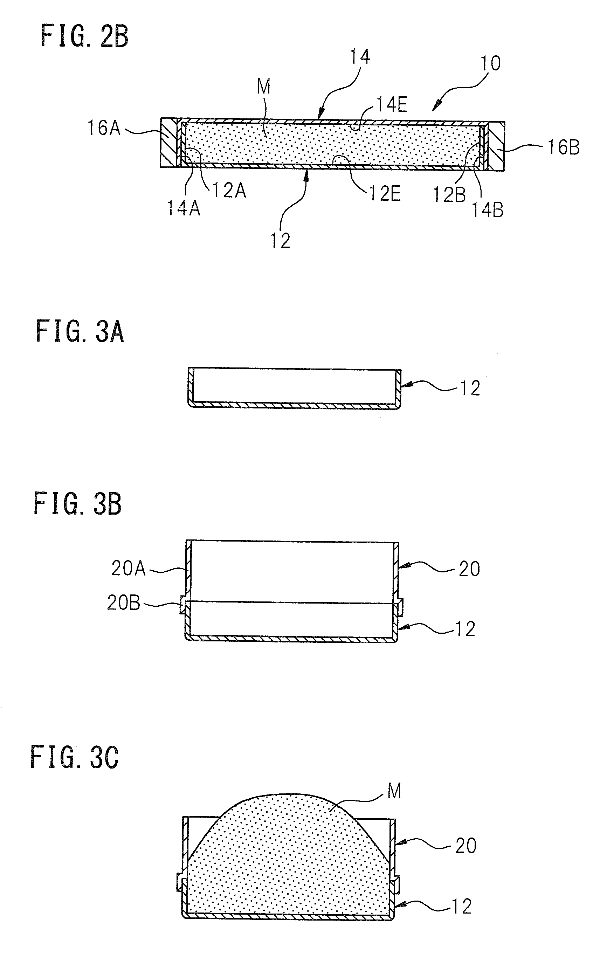

In this case, specifically, the lower case 12 and the upper case 14 are prepared for forming the case 10. This lower case 12 is made of aluminum. It is formed into a shape which is provided with the mutually facing side sheets 12A and 12B and front sheet 12C and back sheet 12D as shown in FIG. 1 and the bottom sheet 12E as shown in FIG. 2B. The upper case 14 is made of aluminum and is formed from a material the same as the material of the lower case 12. It is formed into a shape which is provided with the mutually facing side sheets 14A and 14B and front sheet 14C and back sheet 14D as shown in FIG. 1 and the top sheet 14E as shown in FIG. 2B. In more detail, the lower case 12 is formed into a closed bottom box shape with a top surface opened, while the upper case 14 functions as a closing member which closes this open top surface and is formed into a substantially box shape which fits with this lower case 12 from above so as to cover the outer circumference. That is, upper case 14 is formed to have a size which is slightly larger than the lower case 12 so as to be able to fit over it.

2-3. Reinforcing Frame Preparation Step After the later explained filling step, a reinforcing frame 16 is prepared for reinforcing the outer circumference of the case 10, more specifically, as shown in FIG. 2A, the outer circumferential surface in the posture at the time of rolling. Here, the "posture at the time of rolling" of the case 10 means the posture where the longitudinal direction of the case 10 (in the case where the planar shape of the case is a square, any centerline) is along the rolling direction and the extended surface is along the horizontal direction.

This reinforcing frame 16 is comprised of first and second reinforcing members 16A and 16B which are respectively fastened to the two side sheets 14A and 14B, which extend along the rolling direction of the upper case, in a state extending along the rolling direction and of third and fourth reinforcing members 16C and 16D which are respectively fastened to the front sheet 14C and back sheet 14D which are perpendicular to the rolling direction of the upper case 14 in a state extending along a direction perpendicular to the rolling direction..

Here, the first and second reinforcing members 16A and 16B are respectively formed so that the two ends along the rolling direction of the side sheets 14A and 14B of the upper case 14 to which they are attached have lengths by which they extend out to the front and back from the corresponding side sheets 14A and 14B. Further, the third and fourth reinforcing members 16C and 16D are formed to have lengths the same as the lengths in the direction perpendicular to the extension direction of the front sheet 14C and back sheet 14D of the upper case 14 to which they are attached and are fixed or fastened to the first and second reinforcing members 16A and 16B.

2-4. Filling Step

Next, the mixed powder M which was prepared in the above-mentioned mixed powder preparation step is filled inside the lower case 12. This filling step is performed by the work of uniformly charging the mixed powder M. At this time, the lower case 12 is tapped simultaneously and in parallel with the uniform charging work, that is, mechanical packing work is performed to raise the filled density as a powder. Due to this tapping, the filling rate of the mixed powder becomes 35% to 65% of the theoretical rate in range.

Specifically, as shown in FIG. 3A, the lower case 12 is placed at a predetermined filling position in the state with its top surface opened. Next, as shown in FIG. 3B, the extension sleeve 20 is superposed on the lower case 12. Here, this extension sleeve 20 is comprised of a sleeve body 20A which has a bottom edge which closely contacts the top edge of the lower case 12 over its entire circumference in the state superposed on the lower case 12 and a skirt part 20B which is integrally formed with the sleeve body 20A in a state sticking out outward at the outer circumference of the bottom edge and which fits with the outer circumference of the top edge of the lower case 12 from the outside in the state superposed on the lower case 12.

In this way, in the state with the extension sleeve 20 superposed on the lower case 12, as shown in FIG. 3C, the space formed by the superposition of the lower case 12 and the extension sleeve 20 is charged with the mixed powder M.

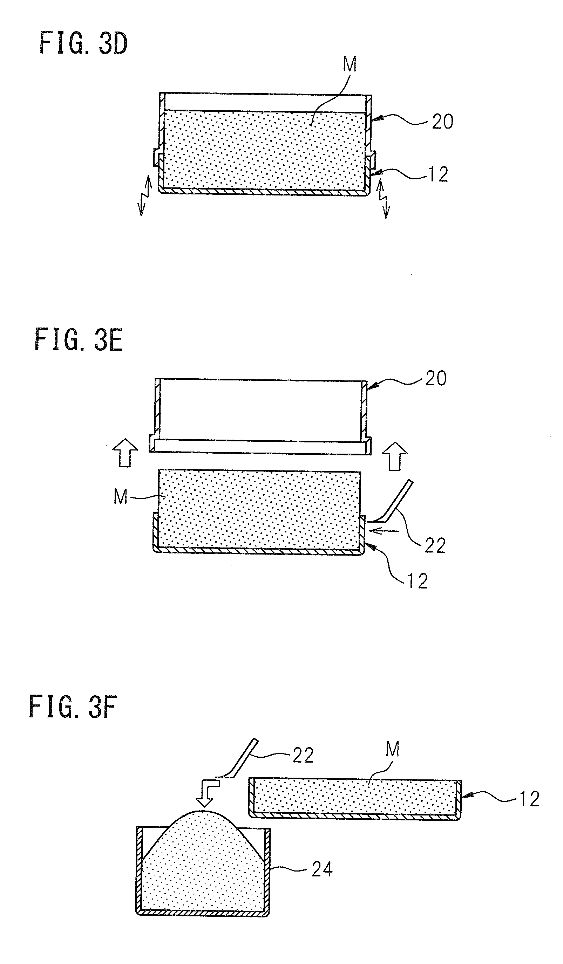

After this, in the state with the inside charged with the mixed powder M, the lower case 12 and the extension sleeve 20 are tapped. As a result, as shown in FIG. 3D, in the space which is formed by superposition of the lower case 12 and the extension sleeve 20, the mixed powder M is raised in filled density. Along with the rise in this filled density, the tops surface of the mixed powder M descends.

Further, if the predetermined tapping time elapses and the mixed powder M becomes the desired filled density, the tapping is stopped and the extension sleeve 20 is lifted upward. As a result, as shown in FIG. 3E, inside the lower case 12, mixed powder M remains which is compacted and which maintains its shape. Further, as illustrated, in the mixed powder M which remains at the lower case 12, the part which is positioned inside the extension sleeve 20 sticks out to above the lower case 12.

After this, the scraper 22 is made to move along the top edge of the lower case 12 whereby the part of the mixed powder M which sticks out upward from the lower case 12 is scraped off to the sides. As shown in FIG. 3F, the scraped off mixed powder M is recovered inside the recovery box 24. Further, the mixture M which is recovered in the recovery box 24 is later returned to the above-mentioned blender where it is again stirred then is used for reuse.

On the other hand, in this way, by scraping off the powder, the mixed powder M is fully filled inside the lower case 12 in the state with the filled density raised. In other words, the top surface of the mixed powder M which is filled in the lower case 12 becomes planar with the top edge of the lower case 12.

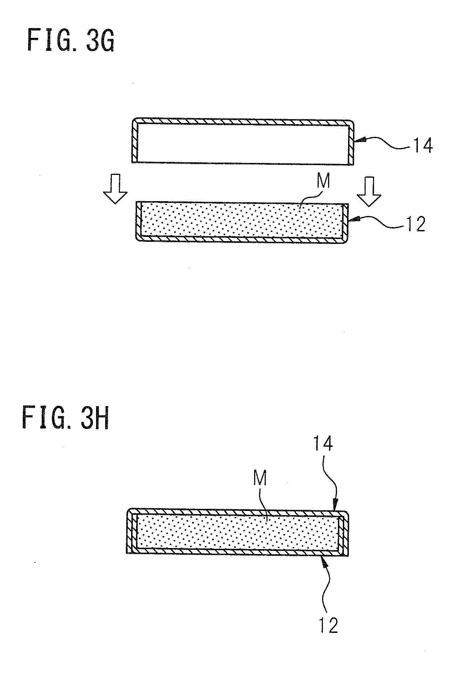

After this, as shown in FIG. 3G, the upper case 14 is fit with the lower case 12 from above to close the open top surface of the lower case 12. In that state, as shown in FIG. 3H, a rollable member 18 which is fully filled inside with the mixed powder M is formed.

Here, the state of the rollable member 18 which is shown in FIG. 3H has extremely important meaning as the "material" for producing the metal-based composite material of the present invention (in the later explained rolling step, meaning the "material to be rolled"). That is, the details will be explained later, but in the two-surface or two-sided clad structure which is obtained by rolling this rollable member 18, the bottom sheet 12E of the lower case 12 defines the bottommost layer (bottom skin material), the mixture M defines the intermediate layer (forming core material), and the top sheet 14E of the upper case 14 defines the topmost layer (top skin material).

Further, for this two-sided clad structure to exhibit sufficient mechanical properties, the adjoining layers have to be in close contact, but in this invention, in the same way as the bottom surface of the mixture M and the top surface of the bottom sheet 12E of the lower case 12 being made to closely contact each other over their entire surfaces, the state is achieved where the top surface of the mixture M and the bottom surface of the top sheet 14E of the upper case 14 closely bond with each other across the entire surfaces. As a result, in the rolled two-sided clad structure, the mutually adjoining layers are in close contact with each other, so a strong bond can be formed. Therefore, as explained later, the mechanical strength is sufficiently secured.

Next, work is performed using the reinforcing frame 16 to reinforce the rollable member 18. This reinforcing work, as shown in FIG. 2B, is performed by surrounding the outer circumference other than the two surfaces, in the posture at the time of rolling the rollable member 18, by the reinforcing frame 16.

In detail, the first and second reinforcing members 16A and 16B are provisionally fixed in positions in the state with the two ends along the rolling direction (that is the front end and the back end) of the side surfaces 14A and 14B in the upper case 14 to which they are attached extending to the front and back from the corresponding side surfaces 14A and 14B. Next, the two ends of the third reinforcing member 16C abut against the first and second reinforcing members 16A and 16B at the front end parts along the rolling direction, while the two ends of the fourth reinforcing member 16D abut against the first and second reinforcing members 16A and 16B at the rear end parts along the rolling direction. The members are provisionally fixed in position in that state.

In the state with the reinforcing frame 16 provisionally fixed to the rollable member 18 in this way, this rollable member 18 is placed in a vacuum furnace and reduced in pressure by a predetermined vacuum degree to degas it.

After this degassing work is ended, the provisionally fastened reinforcing frame 16 is solidly fixed to the rollable member 18 by MIG welding. This MIG welding is performed by welding the top edge of the reinforcing frame 16 and the top edge of the upper case 14 over the entire circumference and by welding the bottom edge of the reinforcing frame 16 and the bottom edge of the upper case 14 over the entire circumference. Here, the bottom edge of the upper case 14 and the bottom edge of the lower case 12 closely adjoin each other in state. As a result, at the point of time when welding the bottom edge of the reinforcing frame 16 and the bottom edge of the upper case 14, the bottom edge of the lower case 12 is also welded. As a result, the case 10 becomes air-tightly sealed as a whole.

Here, the case 10 is air-tightly sealed, so if there is air present inside the rollable member 18 (remaining there), this may remain as a defect. For this reason, in the rolling step, to enable air to escape from inside of the rollable member 18 and prevent it from remaining inside, air vents (not show) are formed at the four corners of the top surface of the upper case 14. Further, due to the formation of these holes, the effect can be expected of removal of gas which entered the rollable member 18 at the time of welding.

2-5. Preheating Step

The rollable member 18 which is reinforced by the reinforcing frame 16 in this way is preheated before rolling. This preheating is performed by allowing the member to stand in a heating furnace in 300°C to 600°C in range in an atmosphere of the surrounding air for 2 hours or more. Here, as the preheating atmosphere, the invention is not limited to preheating in the air. Preheating in argon or another inert gas is more preferable. Further, more preferably, the preheating is performed in 5 Pa or less vacuum atmosphere.

2-6. Rolling Step>

This rolling step is one which rolls the rollable member 18 to plastically work it. The state in this rollable member 18 resulting in unique effects in The present invention will first be explained.

That is, in the rollable member 18 which is supplied to the rolling step, the mixed powder to be rolled is the powder as is. It is not solidified in any way. In the rollable member 18, the above-mentioned tapping enables the filling rate to be raised, but this is not of an extent causing solidification. The state as a powder is maintained.

Further, when supplied to the rolling step, the powder constituted by the mixed powder M is sandwiched between aluminum sheets at its top and bottom. Specifically, the top surface of the mixed powder M is completely and closely covered by the top sheet part 14E of the upper case 14, while the bottom surface of the mixed powder M is completely and closely covered by the bottom sheet 12E of the lower case 12. In this way, this rollable member 18 is filled and sealed with mixed powder M inside the case 10. In that state, the mixed powder M is sandwiched from the top and bottom by aluminum sheets to form a two-sided clad structure. The "material" of the sheet-shaped clad material is prescribed.

The preheated rollable member 18 is rolled to be formed into the targeted shape. When producing a sheet-shaped clad material, cold rolling alone is enough to obtain a clad sheet material which has a predetermined cladding rate with an Al sheet material or an Al container. Hot plastic working may be used for a single working operation or a plurality of working operations may be combined. Further, after hot plastic working, cold plastic working may also be performed. When performing cold plastic working, if annealing before working at 300 to 600°C (preferably 400 to 500°C), the working operation becomes easier.

Since the rollable member 18 is clad by aluminum sheets (or stainless steel sheets), the surfaces are free of ceramic particles which may forn the starting points for breakage at the time of plastic working or which may cause wear of the dies etc. For this reason, it is possible to obtain a metal-based composite material which is good in rolling workability and excellent in strength and surface properties. Further, the obtained hot plastic worked material is clad at its surfaces by metal and the bondability between the surface metal and inside mixed powder M is good, so the corrosion resistance, impact resistance, and heat conductivity are more superior than in the state of only the core material not clad at its surfaces with metal materials.

In another preferred embodiment, before applying the rolling work, it is effective to cover the surface of the rollable member 18 with a metal protective sheet, for example, cover it by a SUS or Cu sheet. Due to this, it is possible to prevent in advance cracks and fractures etc. in the front-back direction liable to be caused at the time of plastic working.

In more detail, the rolling step is more specifically performance of hot rolling repeatedly for 10 to 14 passes by a reduction rate rate of 10 to 70% in range. The rolling temperature in this hot rolling is set to 500°C.

Further, this hot rolling may be used to finish the product to the desired final thickness. Further, after this hot rolling, warm rolling may be performed at 200°C to 300°C in range. Furthermore, after this warm rolling, second warm rolling may be performed at a temperature of 200°C or less.

Further, after the rolling step finished, a heat treatment step at 300°C to 600°C in range for a predetermined time period, that is, annealing step, was performed. After this annealing step, a cooling step was performed to perform a step of correction to a desired smoothness. The two side edges, front end edge, and back end edge were cut off to obtain a predetermined product shape, that is, a two-sided clad structure metal-based composite material.

Examples

Below, examples will be used to explain the present invention in further detail.

According to the present invention, metal-based composite materials which have a $\gamma$-ray absorption function were produced.

Preparation of Mixed Powder for Core Use

To form the core material, the following starting materials were mixed in the ratios of formulation which are shown in Table 1 so as to obtain mixed powders. In Table 1, Samples 1 to 14 are compositions of formulations of core materials of metal-based composite materials which have $\gamma$-ray absorption functions. The mixing was performed by a V-blender for 3 hours.

Starting Material for Core Material Use

Al powder (D50$\approx$10 $\mu$m)

W powder (purity 99.8%, D50=18.5 $\mu$m)

Table 1

| Sample | Amount of Al | | Amount of W | |
|--------|------|------|------|------|
| | vol% | wt% | vol% | wt% |
| 1 | 90.0 | 55.7 | 10.0 | 44.3 |
| 2 | 90.0 | 55.7 | 10.0 | 44.3 |
| 3 | 80.0 | 35.9 | 20.0 | 64.1 |
| 4 | 80.0 | 35.9 | 20.0 | 64.1 |
| 5 | 70.0 | 24.6 | 30.0 | 75.4 |
| 6 | 70.0 | 24.6 | 30.0 | 75.4 |
| 7 | 60.0 | 17.3 | 40.0 | 82.7 |
| 8 | 60.0 | 17.3 | 40.0 | 82.7 |
| 9 | 50.0 | 12.3 | 50.0 | 87.7 |
| 10 | 50.0 | 12.3 | 50.0 | 87.7 |
| 11 | 40.0 | 8.5 | 60.0 | 91.5 |
| 12 | 40.0 | 8.5 | 60.0 | 91.5 |
| 13 | 30.0 | 5.7 | 70.0 | 94.3 |
| 14 | 30.0 | 5.7 | 70.0 | 94.3 |

Preparation of Cases

Cases for forming the skin materials were prepared.

Starting Materials for Skin Material Use and Dimensions of Cases

Al sheets (A5052)

Cases (inside dimensions 190x150x58, sheet thickness 3 mm) Reinforcing frame (thickness 10 mm)

The above Al sheets were welded by TIG to prepare the case of the above dimensions. The case, as explained above referring to FIG. 1, is comprised of an upper case and a lower case. As explained referring to FIG. 2A, a reinforcing frame is provided.

Filling of Mixed Powder (Preparation of Rollable Member)

The procedure which was explained in the above mentioned "2-4: Filling Step" was followed to hand fill and tap powder by the target filling rate of 50% to obtain the filling rates of Table 2.

Table 2

| Sample | Filling rate* (%) |
|--------|-------------------|
| 1 | 44.8 |
| 2 | 46.0 |
| 3 | 47.7 |
| 4 | 47.4 |
| 5 | 48.6 |
| 6 | 48.1 |
| 7 | 49.5 |
| 8 | 49.0 |
| 9 | 50.0 |
| 10 | 50.0 |
| 11 | 48.4 |
| 12 | 47.9 |
| 13 | 46.5 |
| 14 | 47.7 |

Rolling

The above rollable members were heated to 500°C and hot rolled by a plurality of passes to obtain final thicknesses of 3 mm and 6 mm. No surface cracks or wrinkles occurred and smooth rolled surfaces were obtained. The clad rate was about 17% for all samples.

Annealing

After rolling, the members were annealed by stress relief annealing at 450°C.

Removal of Reinforcing Materials

The front and back ends and the two side edges of the annealed rolled materials were cut off to remove the reinforcing materials and obtain the metal-based composite materials of the present invention.

Testing

Observation of Structure

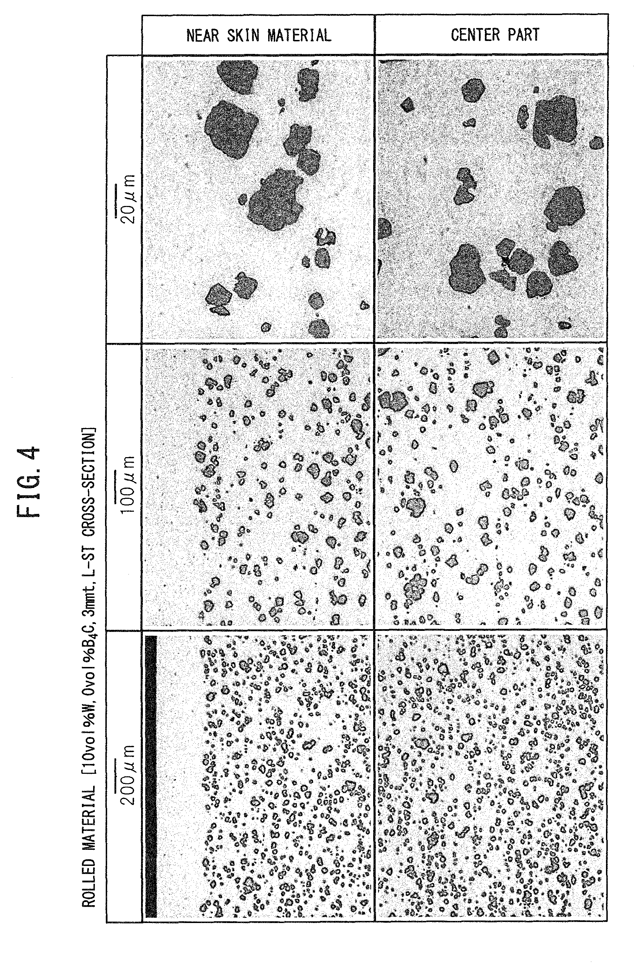

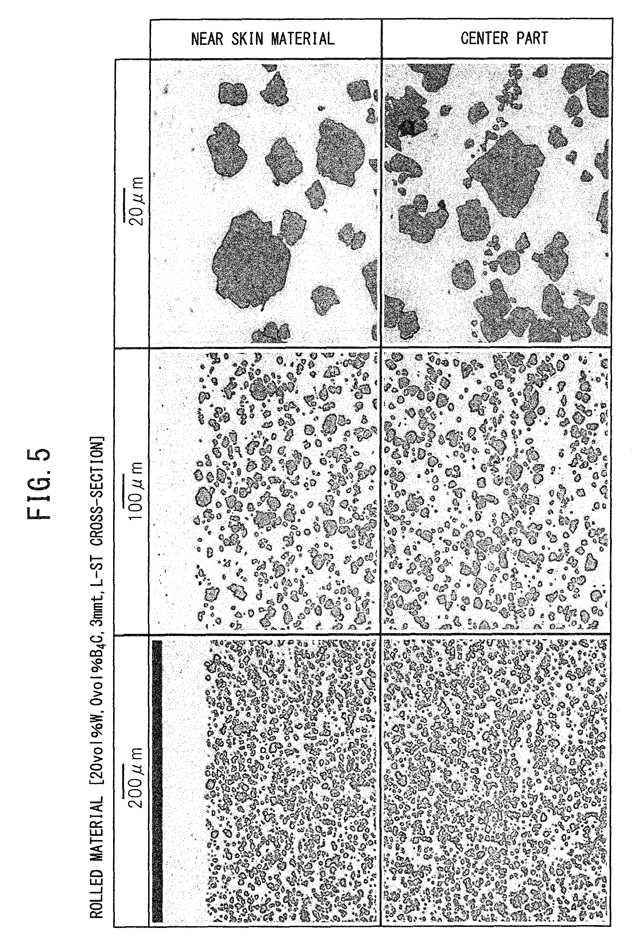

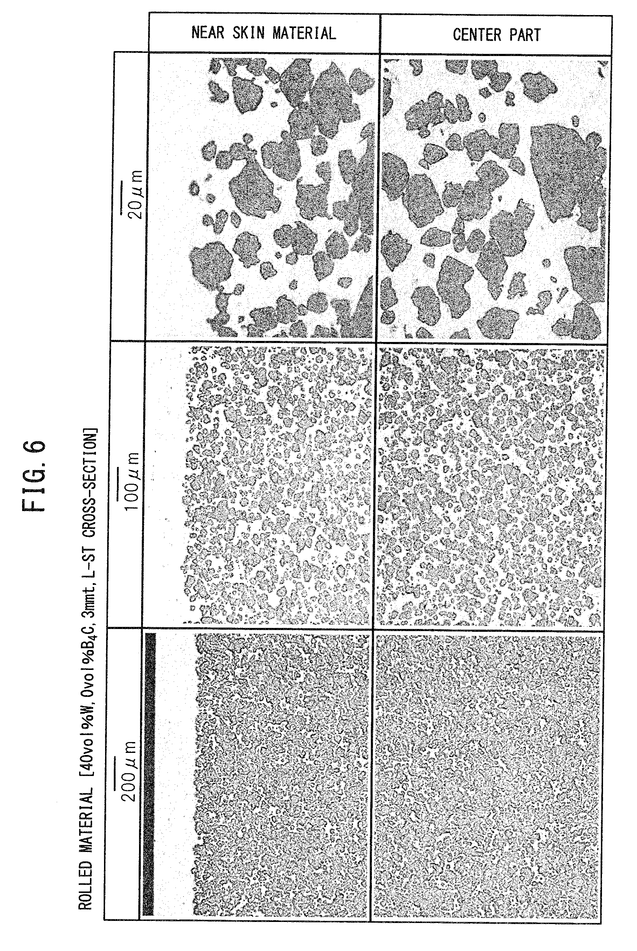

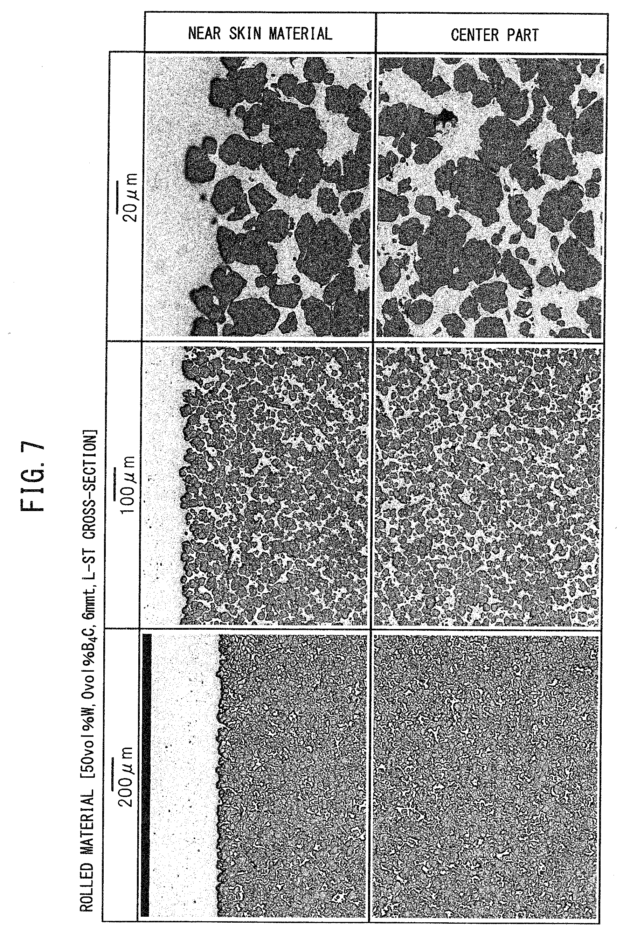

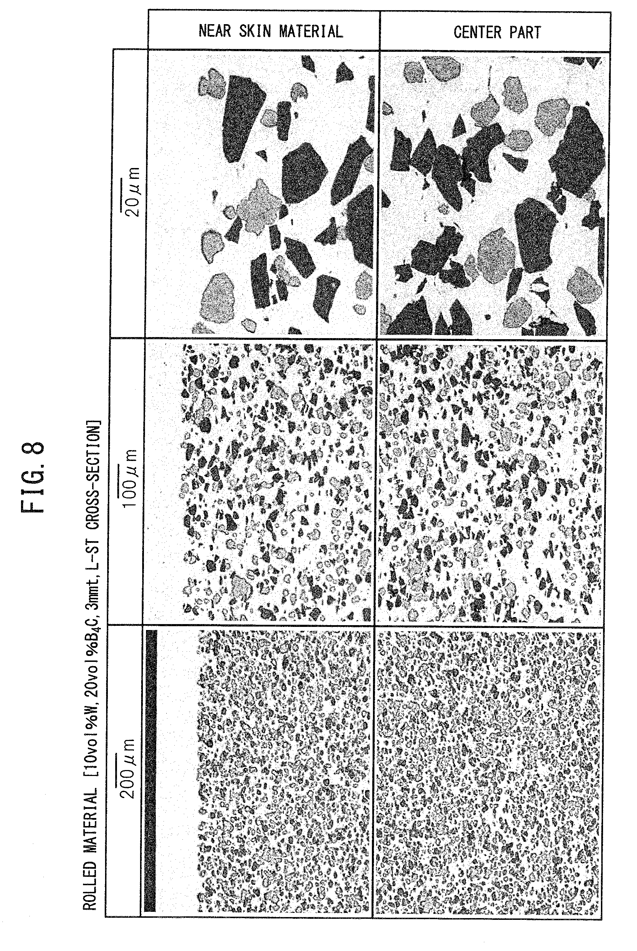

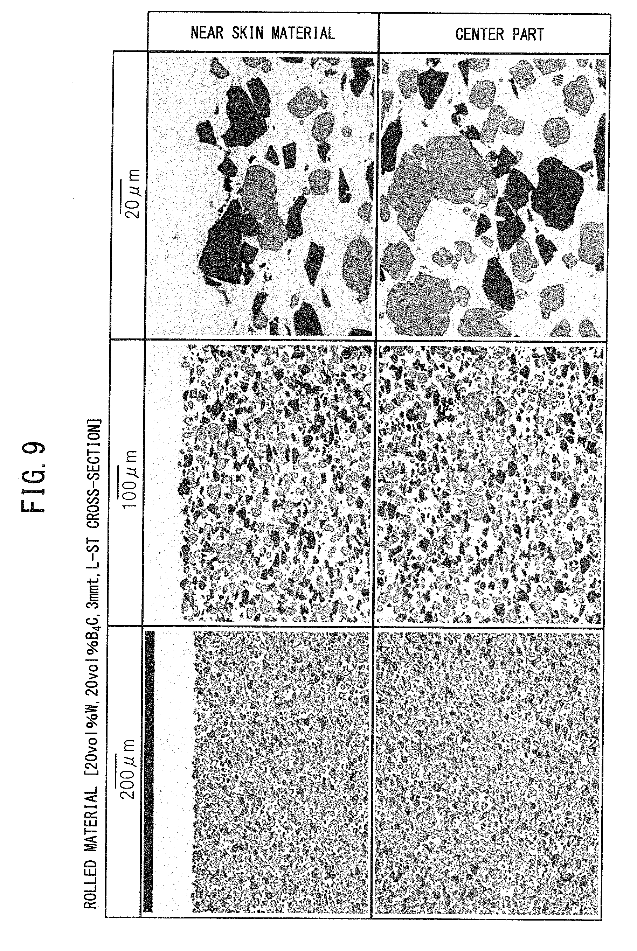

A cross-section of each sample (L-ST cross-section) was polished to a mirror surface and examined for structure by an optical microscope. FIG. 4 to FIG. 9 show typical structural photographs. In each case, the structure was confirmed to be comprised of the mixed powder for core material use which was pressed together and Al powder which was pressed together to form a matrix (white) in which W particles (gray) (and, in Samples 7 to 10, furthermore $B_4C$ particles (black)) were dispersed. Further, each case was confirmed to be comprised of skin materials which were pressed flat (in each photo, top edge part in field "near skin material") and closely contacted the core material.

Measurement of γ-Ray Shielding Rate The dose rates in the case of making the height from the floor 1 meter and making the distance from the ray source to the center of measurement of the detector 25 cm in the case of presence of a sample between them and the case of no sample were respectively measured 10 times. The average values minus the background dose rate were used to find the shielding rate by the following formula.

$$\text{Shielding rate} = (1-\text{dose rate in case of presence of sample/Dose rate in case of no sample}) \times 100$$

Ray source: Cobalt 60 ray source 10 MBq
Measuring device: NaI scintillation survey meter
The γ-ray shielding rates of the samples are shown in Table 3.

Table 3. γ-Ray Shielding Rate of Metal-Based Composite Material

| Sample | Amount of W particles (vol%) | Sheet thickness (mm) | Density ($g/cm^3$) | Unit vol (*) ($g/cm^2$) | Shieling rate (%) |
|---|---|---|---|---|---|
| 1 | 10.0 | 3 | 4.0 | 1.2 | 3.0 |
| 2 | 10.0 | 6 | 4.0 | 2.4 | 7.4 |
| 3 | 20.0 | 3 | 5.4 | 1.6 | 5.0 |
| 4 | 20.0 | 6 | 5.4 | 3.2 | 9.9 |
| 5 | 30.0 | 3 | 6.7 | 2.0 | 7.1 |
| 6 | 30.0 | 6 | 6.7 | 4.0 | 12.6 |
| 7 | 40.0 | 3 | 7.9 | 2.4 | 7.9 |
| 8 | 40.0 | 6 | 7.9 | 4.9 | 15.4 |
| 9 | 50.0 | 3 | 9.1 | 2.8 | 10.0 |
| 10 | 50.0 | 6 | 9.1 | 5.5 | 19.0 |
| 11 | 60.0 | 3 | 10.1 | 3.2 | 12.4 |
| 12 | 60.0 | 6 | 10.1 | 6.2 | 21.9 |
| 13 | 70.0 | 3 | 11.0 | 3.6 | 13.6 |
| 14 | 70.0 | 6 | 11.0 | 6.9 | 25.1 |
| 15* | 1070 | 3 | 2.7 | 0.8 | 2.0 |
| 16* | 1070 | 6 | 2.7 | 1.6 | 4.5 |
| 17* | Lead | 3 | 11.0 | 3.3 | 11.9 |
| 18* | Lead | 6 | 11.0 | 6.6 | 23.0 |

(*) Unit mass: Mass per unit area = Sheet thickness (cm) x density ($g/cm^3$)
*: Comparative sample

First, Sample 15 and Sample 16 are 1070 aluminum materials, but in the shielding rate of γ-rays, Sample 1 to Sample 14 in which tungsten powder is combined with the core material have higher shielding effects when compared with the same sheet thicknesses. Further, the greater the amount of tungsten powder, the higher the shielding efficiency, but the density of the member (weight per unit volume) also increases proportionally to this. In Sample 17 and Sample 18, the shielding rate of a lead material is shown. The shielding efficiency is high, but the density is also large. However, the shielding rates of the metal composite materials of Sample 13 and Sample 14 give shielding effects of extents comparable with these. According to the present invention, by adjusting the amount of tungsten in the matrix of the core material, it is possible to adjust the shielding rate and density according to the application.

Further, as shown in Table 4, Samples 19 to 66 are samples in which W and $B_4C$ are dispersed, but the respective totals are 5 vol% to 70 vol% in range. These samples were measured for shielding rates of neutrons and γ-rays. As a result of the tests, it was learned that there were effects of shielding against neutrons and γ-rays proportional to the amounts of dispersion of W and $B_4C$. Regarding the relationship of the sheet thicknesses and shielding rate, it was learned that there is a proportional relationship such as obtained in Samples 1 to 14. Accordingly, it was learned that even if simultaneously dispersing W and $B_4C$, shielding rates against electromagnetic waves are obtained corresponding to the contents. Further, for the samples with W and $B_4C$ dispersed in Samples 19 to 66, the metal-based composite materials are assumed to be based on the above-mentioned metal-based composite materials with core materials comprised of W and Al.

Table 4

| Sample | Amount of W particles (vol%) | Amount of $B_4C$ particles (vol%) | Sheet thickness (mm) | Density (g/cm$^3$) | Neutron shielding rate (%) | $\gamma$-ray shielding rate (%) |
|---|---|---|---|---|---|---|
| 19 | 1.0 | 4.0 | 3 | 2.8 | 38.4 | 0.9 |
| 20 | 1.0 | 4.0 | 6 | 2.8 | 64.8 | 1.1 |
| 21 | 2.5 | 2.5 | 3 | 3.0 | 23.3 | 1.2 |
| 22 | 2.5 | 2.5 | 6 | 3.0 | 47.8 | 1.8 |
| 23 | 4.0 | 1.0 | 3 | 3.2 | 8.9 | 1.5 |
| 24 | 4.0 | 1.0 | 6 | 3.2 | 19.1 | 2.4 |
| 25 | 2.0 | 8.0 | 3 | 2.9 | 64.7 | 1.1 |
| 26 | 2.0 | 8.0 | 6 | 2.9 | 81.6 | 1.5 |
| 27 | 5.0 | 5.0 | 3 | 3.3 | 47.8 | 1.8 |
| 28 | 5.0 | 5.0 | 6 | 3.3 | 75.9 | 2.9 |
| 29 | 8.0 | 2.0 | 3 | 3.7 | 17.7 | 2.3 |
| 30 | 8.0 | 2.0 | 6 | 3.7 | 37.7 | 4.2 |
| 31 | 5.0 | 15.0 | 3 | 3.3 | 85.1 | 1.8 |
| 32 | 5.0 | 15.0 | 6 | 3.3 | 98.8 | 2.8 |
| 33 | 10.0 | 10.0 | 3 | 4.0 | 72.8 | 2.8 |
| 34 | 10.0 | 10.0 | 6 | 4.0 | 86.8 | 4.7 |
| 35 | 15.0 | 5.0 | 3 | 4.7 | 41.6 | 3.6 |
| 36 | 15.0 | 5.0 | 6 | 4.7 | 73.0 | 7.0 |
| 37 | 10.0 | 20.0 | 3 | 4.0 | 90.5 | 2.8 |
| 38 | 10.0 | 20.0 | 6 | 4.0 | 97.0 | 4.9 |
| 39 | 15.0 | 15.0 | 3 | 4.6 | 80.1 | 3.6 |
| 40 | 15.0 | 15.0 | 6 | 4.6 | 95.0 | 7.0 |
| 41 | 20.0 | 10.0 | 3 | 5.3 | 72.4 | 4.9 |
| 42 | 20.0 | 10.0 | 6 | 5.3 | 92.2 | 9.1 |
| 43 | 10.0 | 30.0 | 3 | 3.9 | 97.1 | 2.8 |
| 44 | 10.0 | 30.0 | 6 | 3.9 | 98.3 | 4.8 |
| 45 | 20.0 | 20.0 | 3 | 5.3 | 93.0 | 4.5 |
| 46 | 20.0 | 20.0 | 6 | 5.3 | 98.8 | 8.7 |
| 47 | 30.0 | 10.0 | 3 | 6.6 | 72.2 | 7.0 |
| 48 | 30.0 | 10.0 | 6 | 6.6 | 89.3 | 12.7 |
| 49 | 10.0 | 40.0 | 3 | 3.8 | 96.3 | 2.7 |
| 50 | 10.0 | 40.0 | 6 | 3.8 | 98.7 | 4.8 |
| 51 | 25.0 | 25.0 | 3 | 5.7 | 89.1 | 5.6 |
| 52 | 25.0 | 25.0 | 6 | 5.7 | 97.3 | 10.9 |
| 53 | 40.0 | 10.0 | 3 | 7.8 | 32.7 | 9.0 |

(continued)

| Sample | Amount of W particles (vol%) | Amount of B$_4$C particles (vol%) | Sheet thickness (mm) | Density (g/cm$^3$) | Neutron shielding rate (%) | γ-ray shielding rate (%) |
|---|---|---|---|---|---|---|
| 54 | 40.0 | 10.0 | 6 | 7.8 | 97.8 | 16.2 |
| 55 | 10.0 | 50.0 | 3 | 3.7 | 97.3 | 2.9 |
| 56 | 10.0 | 50.0 | 6 | 3.7 | 99.9 | 4.8 |
| 57 | 30.0 | 30.0 | 3 | 6.3 | 95.5 | 6.8 |
| 58 | 30.0 | 30.0 | 6 | 6.3 | 98.3 | 12.1 |
| 59 | 50.0 | 10.0 | 3 | 8.8 | 31.6 | 10.2 |
| 60 | 50.0 | 10.0 | 6 | 8.8 | 84.0 | 19.0 |
| 61 | 20.0 | 50.0 | 3 | 4.8 | 98.0 | 4.6 |
| 62 | 20.0 | 50.0 | 6 | 4.8 | 99.9 | 8.4 |
| 63 | 35.0 | 35.0 | 3 | 6.7 | 93.6 | 7.5 |
| 64 | 35.0 | 35.0 | 6 | 6.7 | 98.1 | 14.8 |
| 65 | 50.0 | 20.0 | 3 | 8.5 | 82.3 | 10.1 |
| 66 | 50.0 | 20.0 | 6 | 8.5 | 18.5 | 18.5 |
| B$_4$C powder particles: D50=33 μm | | | | | | |

Industrial Applicability

According to the present invention, a metal-based composite material which is light in weight and has a sufficient function of absorbing radioactive rays and which is excellent in strength, corrosion resistance, workability, impact resistance, heat conductivity, and handling and a method of production of the same are provided.

Reference Signs List

10 case
12 lower case
14 upper case
18 rollable member
20 sleeve
22 scraper
24 recovery box
M mixed powder

**Claims**

1. A metal-based composite material of the present invention which is provided with
a core material which is comprised of aluminum powder which is pressed together to form a matrix and of tungsten particles which are dispersed in the matrix and with
a pair of skin materials which are comprised of aluminum sheets which are brought into close contact with and sandwich the core material to form a two-sided clad structure,
said tungsten particles being contained in said core material in an amount of 5 vol% to 70 vol%.

2. The metal-based composite material according to claim 1, wherein said skin materials have thicknesses of 10% to 25% of the thickness of said metal-based composite material as a whole.

**3.** The metal-based composite material according to either claim 1 or 2, wherein said core material is comprised of said matrix into which furthermore ceramic particles are dispersed.

**4.** The metal-based composite material according to claim 3, wherein said ceramic particles are $B_4C$ particles.

**5.** The metal-based composite material according to claim 4, wherein said $B_4C$ particles are contained in said core material in total with said tungsten particles in an amount of 5 vol% to 70 vol%.

**6.** The metal-based composite material according to claim 1, wherein said skin materials are comprised of stainless steel sheets instead of said aluminum sheets.

**7.** A method of production of the metal-based composite material according to any one of claims 1 to 6, which comprises

(a) a step of mixing aluminum powder for forming said matrix and tungsten powder which is comprised of said tungsten particles in an amount of tungsten particles of 5 vol% to 70 vol% so as to form mixed powder for forming said core material,
(b) a step of preparing a case which includes a lower case and an upper case which are comprised of aluminum sheets for forming said skin materials and which are formed to be able to be sealed with each other,
(c) a step of filling said lower case with said mixed powder,
(d) a step of covering said lower case with said upper case to seal it and thereby prepare a rollable member from a case which is filled with said mixed powder,
(e) a step of preheating said rollable member so that said mixed powder maintains a solid phase state, and
(f) a step of rolling said rollable member which was preheated in said preheating step to obtain said metal-based composite material.

**8.** The method of production of a metal-based composite material according to claim 7 wherein, said filling step (c) includes a tapping operation for raising a filled density of said mixed powder.

**9.** The method of production of a metal-based composite material according to either of claim 7 or 8 wherein said filling step (c) includes an operation whereby a top surface of said mixed powder becomes planar with a top edge of said case.

**10.** The method of production of a metal-based composite material according to any one of claims 7 to 9 wherein in said mixing step (a), ceramic powder which is comprised of said ceramic particles is furthermore mixed.

**11.** The method of production of a metal-based composite material according to claim 10 wherein said ceramic powder is $B_4C$ powder.

**12.** The method of production of a metal-based composite material according to claim 11 wherein said $B_4C$ powder is added with respect to said mixed powder as a whole in total with said tungsten particles in an amount of 5 vol% to 70 vol%.

**13.** The method of production of a metal-based composite material according to any one of claims 7 to 12 wherein as said skin materials, stainless steel sheets are used instead of said aluminum sheets.

**14.** A metal-based composite material which is produced by the method of production according to any one of claims 7 to 13.

FIG. 1

14A    14D    14

14C    14B

10

12A    12D

12C    12

ROLLING DIRECTION

12B

FIG. 2A

16C

10

14C    12C

14A

12A

12B

X

14B

12D    14D

16(18)

X

16B

16A

16A    16D

16A    16B

16D

FIG. 2B

FIG. 3A

FIG. 3B

FIG. 3C

## FIG. 3D

## FIG. 3E

## FIG. 3F

FIG. 3G

14

M

12

FIG. 3H

M

14

12

FIG. 4

ROLLED MATERIAL [10vol%W, 0vol%B₄C, 3mmt, L-ST CROSS-SECTION]

FIG. 5

ROLLED MATERIAL [20vol%W, 0vol%B₄C, 3mmt, L-ST CROSS-SECTION]

FIG. 6

ROLLED MATERIAL [40vol%W, 0vol%B$_4$C, 3mmt, L-ST CROSS-SECTION]

| | NEAR SKIN MATERIAL | CENTER PART |
|---|---|---|
| $20\,\mu m$ | | |
| $100\,\mu m$ | | |
| $200\,\mu m$ | | |

22

FIG. 7

ROLLED MATERIAL [50vol%W, 0vol%B₄C, 6mmt, L-ST CROSS-SECTION]

FIG. 8

ROLLED MATERIAL [10vol%W, 20vol%B₄C, 3mmt, L-ST CROSS-SECTION]

# FIG. 9

ROLLED MATERIAL [20vol%W, 20vol%B$_4$C, 3mmt, L-ST CROSS-SECTION]

EP 2 891 534 A1

## INTERNATIONAL SEARCH REPORT

| International application No. |
|---|
| PCT/JP2013/073376 |

**A. CLASSIFICATION OF SUBJECT MATTER**
*B22F7/04*(2006.01)i, *B22F3/18*(2006.01)i, *C22C1/04*(2006.01)i, *C22C1/05*(2006.01)i, *C22C21/00*(2006.01)i, *C22C27/04*(2006.01)i, *C22C32/00*(2006.01)i, *C22F1/04*(2006.01)i, *C22F1/18*(2006.01)i, *G21F1/08*(2006.01)i,
According to International Patent Classification (IPC) or to both national classification and IPC

**B. FIELDS SEARCHED**

Minimum documentation searched (classification system followed by classification symbols)
B22F1/00-8/00, C22C1/04, C22C21/00-21/18, C22C27/04, C22C32/00, C22F1/04-1/05, C22F1/18, G21F1/08, C22F1/00

Documentation searched other than minimum documentation to the extent that such documents are included in the fields searched
Jitsuyo Shinan Koho 1922-1996 Jitsuyo Shinan Toroku Koho 1996-2013
Kokai Jitsuyo Shinan Koho 1971-2013 Toroku Jitsuyo Shinan Koho 1994-2013

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2004-20414 A (Mitsubishi Heavy Industries, Ltd.), 22 January 2004 (22.01.2004), claims 1 to 6 (Family: none) | 1-6 |
| A | JP 2011-500958 A (Nippon Light Metal Co., Ltd.), 06 January 2011 (06.01.2011), claims 1 to 23 & EP 2214852 A & WO 2009/054075 A1 | 1-14 |
| A | JP 09-71828 A (Toho Kinzoku Co., Ltd.), 18 March 1997 (18.03.1997), claim 1 (Family: none) | 1-14 |

| ☐ Further documents are listed in the continuation of Box C. | ☐ See patent family annex. |
|---|---|

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 November, 2013 (14.11.13) | 26 November, 2013 (26.11.13) |

| Name and mailing address of the ISA/ Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2013/073376

Continuation of A. CLASSIFICATION OF SUBJECT MATTER
(International Patent Classification (IPC))

*C22F1/00*(2006.01)n

(According to International Patent Classification (IPC) or to both national classification and IPC)

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004020414 A
- JP 2007315843 A

- JP 3697559 B